# EUROPEAN PATENT APPLICATION

(11) **EP 4 404 355 A1**
(43) Date of publication of application: **24.07.2024**
(21) Application number: 23152704.5
(22) Date of filing: 20.01.2023
(51) Int. Cl.: H01M 50/284, H01M 50/287, H01M 50/249, H01M 50/204

(54) **MODULAR BATTERY PACK**

(71) Applicant: KNORR-BREMSE Systeme für Nutzfahrzeuge GmbH, 80809 München (DE)
(72) Inventor: BIRKAS, Viktor, Balazs, 1115 Budapest (HU); LINDNER, Peter, 2300 Ráckeve (HU); MLINARCSEK, Csaba, 1165 Budapest (HU); KISS, Dávid, 2066 Szár (HU)

(57) **Abstract**

The present invention deals with a battery pack (B), comprising:
at least one energy storage module (1);
a housing (3), being adapted to receive at least one energy storage module (1);
a side cover (2), adapted to close the housing (3);
an electronic cover (5), adapted to close the housing (3) on the side opposite to the side cover (2);
a connector (7), being positioned at the electronic cover (5);
and a connection element (4, 4', 4a, 4a'), connecting the connector (7) with the at least one energy storage module (1).

## Description

The present invention deals with a modular battery pack.

Recently, secondary batteries have attracted much attention as an environmentally-friendly energy source for use in electric vehicles. However, along with the continuous demand for a large-capacity secondary battery structure, including the utilization of the secondary battery as an energy storage, there is also a growing demand for battery module structures in which a plurality of battery cells or energy storage modules can be stacked and electrically connected to provide individual voltage and current requirements, e.g. in an electric or hybrid vehicle.

In prior art, battery modules do not have an easily adaptable modular structure.

From prior art, document US2007/0284159 A1 is known, describing a storage battery system suitable for, for example, vehicles, bicycles, trams, elevators, aerogenerators and emergency power supplies, etc., which aim to enhance energy efficiency, and also relates to an on-vehicle power supply system and to a vehicle provided with such a storage battery system. Herein, two modules are provided.

However, batteries of a different size or batteries with different electronic properties are required for specific applications. Hence, a completely new product must be developed every time. Hence, changing requirements cannot be met, or only at the cost of many compromises.

If battery with different sizes or batteries with different electric properties (e.g. 24V, 48V) should be integrated into a battery module, a completely new product (battery pack) must be developed for each specific battery system functionality, which is time consuming and expensive.

A technical problem underlying the present invention is hence the provision of a battery pack with a pre-defined housing, into which different batteries and interfacing electrical components can be integrated.

The technical problem of the present application is solved by a battery pack according to claim 1. An advanced use of the battery pack is depicted in claim 14.

Further advantageous embodiments of the present invention are subject-matter of the dependent claims.

An inventive battery pack comprises: at least one energy storage module;
a housing, being adapted to receive at least one energy storage module;
a side cover, adapted to close at least one portion of the housing;
an electronic cover, adapted to close the housing at another portion of the housing;
a connector, being positioned at the electronic cover;
and a connection element (e.g. cable and/or bus bar), connecting the connector with the at least one energy storage module.

Such battery pack incorporates a modular approach, which means that the battery pack is split into modules, e.g. energy storage modules and respective interfacing electric compounds. This can lower economic costs in development and improve the development time for battery modules. Thus, the multiple modules will reduce the technology development time, foster re-usability and selective replacement of modules and last but not least, make testing of the system components easier.

Furthermore, if a new battery (battery type, battery design) appears on the market, specific electrical compounds can be integrated in the housing, and it is not necessary to plan a completely new design of the battery pack in order to integrate it into a common battery system. It is possible to arrange individual cells in a series and/or parallel combination to attain the power levels required for the application, by dividing interfacing electrical components into groups that can be housed within individual circuit boards, and other parts. Furthermore, the functionality and size of the system are customizable, hence, it can be decided by a customer if only a battery pack is needed or also an electrical system (power electronics) is needed - e.g. power electronics for managing the battery and also a power distribution module or the like. As two different potential modules (battery and electronics) can be present in a system, the customizability is increased.

Preferably the side cover is attached to the extruded housing with screws or through a welding process.

Hence, the housing can be closed with the side cover and also the electronic cover and it is very easy to provide many energy storage modules in the housing.

Preferably, the housing is prefabricated by an extrusion process. Such process is easy and cheap with regard to manufacturing.

Preferably, the side covers are made of plastic or aluminium or compound material. The machining and the application of the side cover hence is easy and cheap.

Preferably, a battery management system is further contained in the housing.

With such design, advanced battery packs can be manufactured, and the state of the batteries (e.g. charging) can be monitored, e.g. by a vehicle control system or a main printed cirucit board.

Preferably, at least two energy storage modules are stacked in the housing.

Preferably, the energy storage modules are sandwiched. This allows using of minimum space, and a very compact design of the battery pack.

Preferably, the energy storage modules are connected by a connection element (e.g. cable and/or a busbar), and the energy storage module being positioned closest to the electric cover is connected to the connector by another connection element (e.g. cable and/or busbar).

By such means, it is easy to connect the batteries, and the connection of all the battery packs is enabled in a very easy way.

Preferably, at least one printed circuit board is enclosed within the housing.

In this case the power distribution between different electrical loads and/or the charging of the energy storage module (s) is handled inside the battery pack. This printed circuit board can also be used to prevent error propagation between the boardnet of the vehicle and the modular battery pack. Different circuit boards with different functionalities can be easily included into the housing.

Furthermore, a coil, being the inductance of a DC/DC converter, or the whole DC/DC-converteris further preferably contained in the housing, even more preferably integrated on the main printed circuit board. However, the DC/DC converter per se can be a separate module so the customizability is increased and the system is easily adaptable.

Hence, the charging can be handled inside the battery pack, as the inductance of the DC/DC converter can be included into the pack. Hence, the battery pack can be easily supplemented with a coil, and the integration of all electronic parts is possible. The DC/DC converter can advantageously be used for charging the modular battery pack.

The DC/DC converter can be used for the current and voltage control of the battery module and the board net of the vehicle.

A preferable use of the battery pack is the use as a second battery, even more preferably for a commercial vehicle.

In the following, preferred embodiments are described further in detail by the appended drawings.
Fig. 1 is a schematic view of a battery pack according to a first embodiment of the present invention.
Fig. 2 is a schematic view of a battery pack according to a second embodiment of the present invention.
Fig. 3 shows two options for connecting two energy storage modules.
Fig. 4 shows two different options of battery pack connectors.
Fig. 5 shows a battery pack according to a third embodiment of the present invention.
Fig. 6 shows a battery pack according to a fourth embodiment of the present invention.

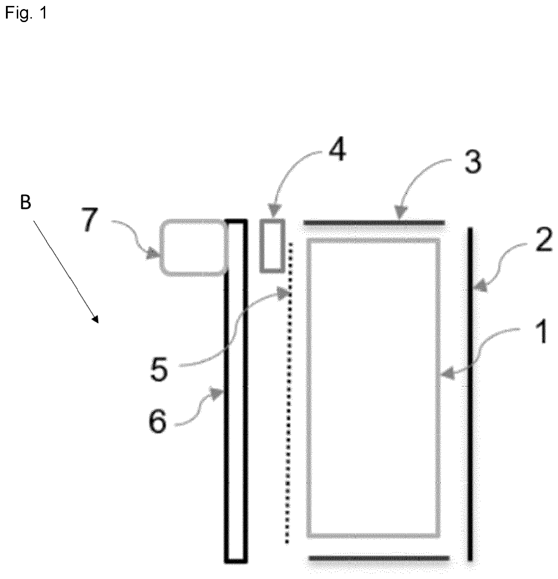

In Fig. 1, a first embodiment of the present invention is shown.

A battery pack B is provided, with an energy storage module 1 enclosed in an extruded housing 3. A side cover 2 closes the housing from one side, the electronic cover 6 closes the housing from the other side. Close to the energy storage module 1, a battery management system 5 is provided, furthermore a connection element 4 (here provided as a cable), connecting the energy storage module 1 with a connector 7, provided on the electronic housing 6. Also a different connection element (busbar 4a, not shown in this figure) or other type of electrical connection could be used.

This is a very simple design, if only an energy storage unit with basic monitoring function is needed.

The side cover 2 can be attached and fixed to the housing 3 with respective fixation means 11, (not shown here), for example, with screws or through a welding. The energy storage module 1 is provided in the housing 3. The connection element 4 is shown schematically, to connect the energy storage module 1 and the connector 7. This ensures the communication contact and the conduction of current.

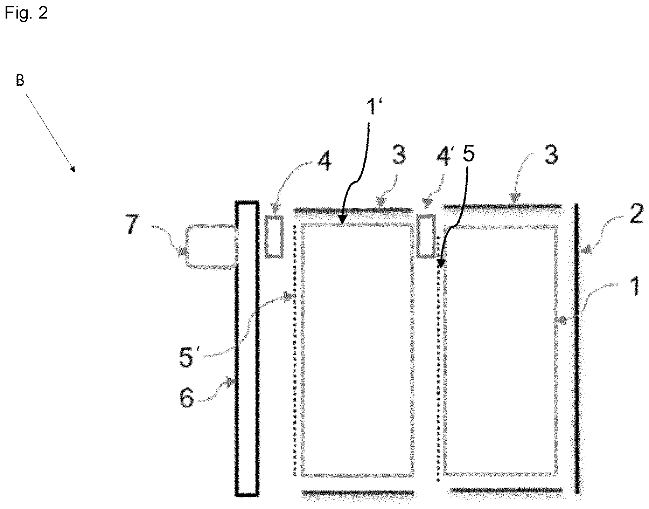

In Fig. 2, a second embodiment of the invention is shown In comparison to Fig. 1, two energy storage modules 1 and 1' are shown, with respective connection elements 4 and 4'.

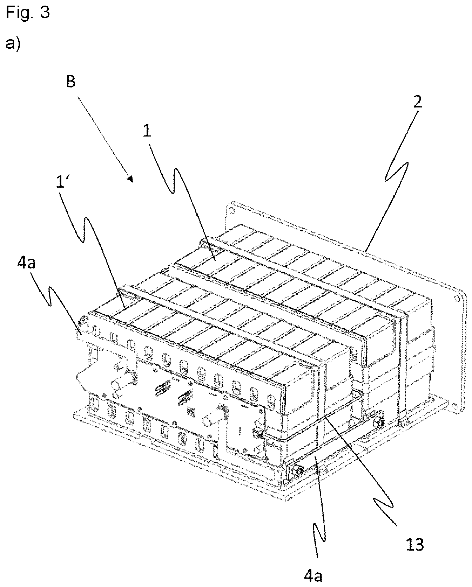

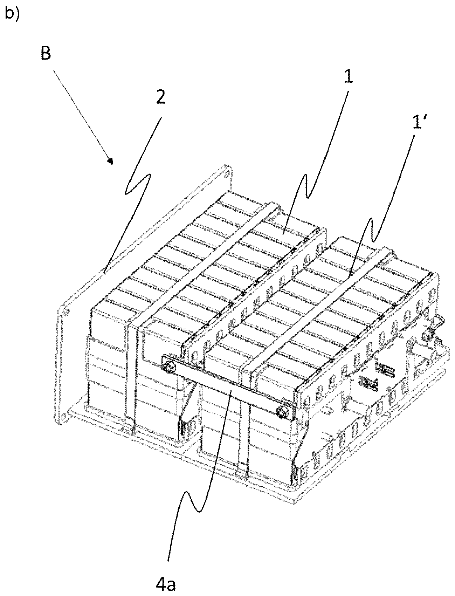

For the second energy storage module 1', also a second battery management system 5' is provided. Herein, the battery pack B is customizable. The dimensions of the extruded housing 3 can be varied (at least into one direction), and the connector component 7 can be adapted to the customer's power needs e.g. the number of electrical outputs could be different (see Fig. 3 below).

In Fig. 2 it becomes apparent that the battery modules 1, 1' have roughly the same size, as the profile of the housing 3 can easily be integrated into e.g. a vehicle.

Fig. 3 shows two views on the second embodiment. In Fig. 3 a), two energy storage modules 1 and 1' are shown, connected by connection elements 4a, here provided as a busbars. A further connection means 13 is provided for connecting the battery management systems (not shown in detail here).

In Fig. 3 b), it is also shown that the two energy storage modules 1 and 1' are connected by a connection element 4a, here provided as a busbar.

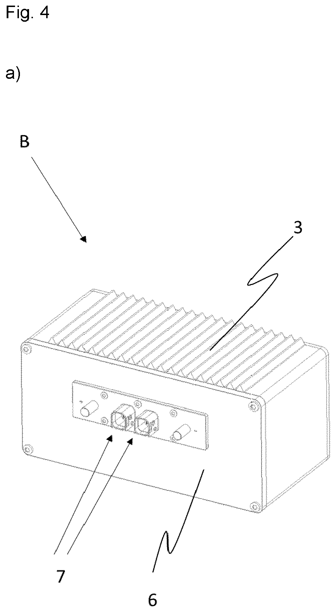

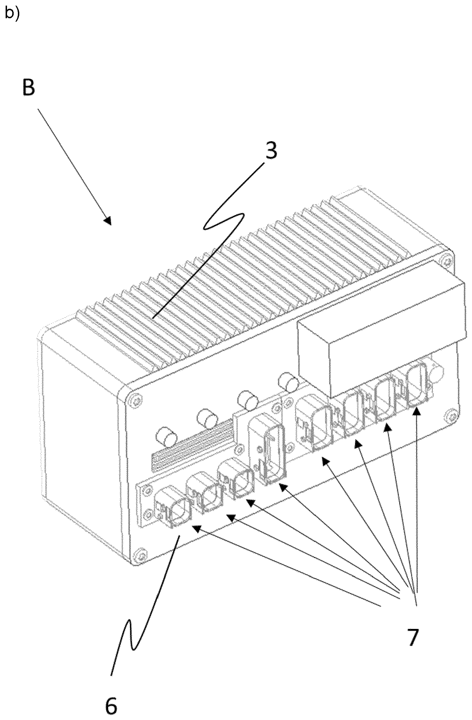

In Fig. 4, it can be seen that on the front (electronic cover 6), there are several connectors 7.

In Fig. 4 a), there are two connectors 7, wherein in Fig. 4 b), there are eight connectors 7.

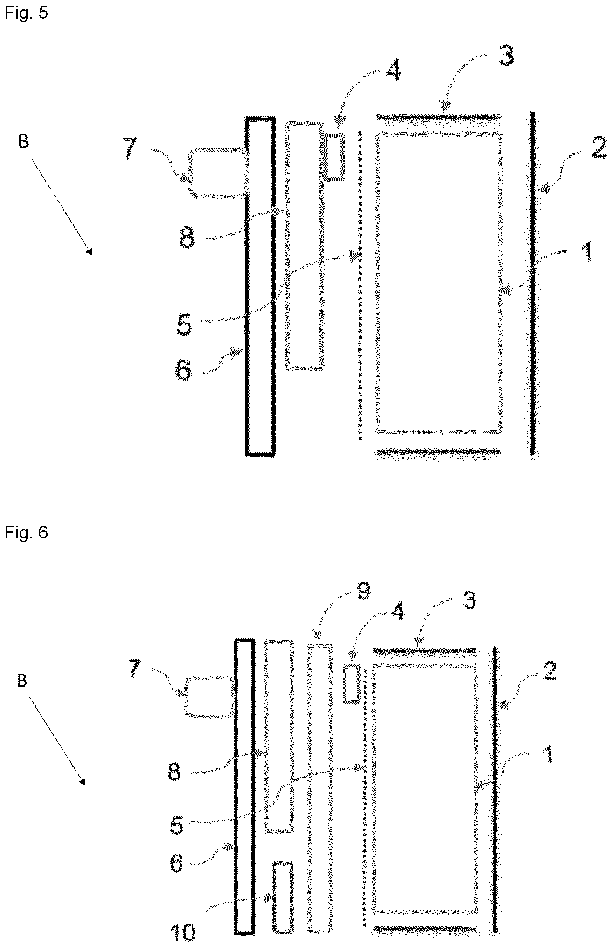

Fig. 5 shows a third embodiment of the present invention.

Herein, only one energy storage module 1 is shown, however here equipped with an I/O printed circuit board 8. A connection element 4 connects the printed circuit board with a energy storage module 1.

Herein the power distribution between different electrical loads is handled inside the battery pack B. The charging of the battery pack B is handled by other components, e.g. the vehicle control system, and no converter is needed. The additional other electronics, herein the I/O printed circuit board 8, are integrated into the housing 3.

Fig. 6 shows a fourth embodiment of the present invention. Herein, an additional printed main circuit board 9 is included into the housing 3. Furthermore, a coil 10 is included within the housing.

By such embodiment, the power distribution between the different electric loads and the charging is handled inside the battery pack B, as a DC/DC converter 12 (not shown here) is also included in the battery pack B, even on the main cirucit board 9.

The battery pack B can be easily supplemented with the coil 10, a DC/DC converter 12 (not shown here) and a printed main circuit board 9.

With the coil, being the inductance of a DC/DC converter 12 (not shown here), current and voltage control of the battery module B and the board net of the vehicle can be performed.

The present invention is not limited to the above-mentioned embodiments. Also the integration of more components within the housing is possible.

### LIST OF REFERENCE SIGNS

- B: Battery pack

- 1: Energy storage module
- 2: Side cover
- 3: Housing (extruded)
- 4, 4': Connection element (cable)
- 4a: Connection element (Bus bar)
- 5: Battery management system
- 6: Electronic cover
- 7: Connector
- 8: I/O PCB (printed circuit board)
- 9: Main PCB
- 10: Coil
- 11: Fixation means
- 12: DC/DC converter
- 13: Connection means (for battery management systems)

## Claims

1. Battery pack (B), comprising:
at least one energy storage module (1);
a housing (3), being adapted to receive at least one energy storage module (1);
a side cover (2), adapted to close at least a portion of the housing (3);
an electronic cover (5), adapted to close another portion of the housing (3);
a connector (7), being positioned at the electronic cover (5);
and a connection element (4, 4', 4a, 4a'), connecting the connector (7) with the at least one energy storage module (1).

2. Battery pack (B) according to claim 1, wherein the side cover (2) is attached to the housing (3) via a fixation means (11), preferably screws, or a welding.

3. Battery pack (B) according to one of claims 1 or 2, wherein the housing (3) is fabricated via an extrusion process.

4. Battery pack (B) according to one of the previous claims, wherein the side cover (2) is made of plastic or aluminum or a compound material.

5. Battery pack (B) according to one of the previous claims, wherein a battery management system (5) is further contained in the housing (3).

6. Battery pack (B) according to one of the previous claims, wherein at least two energy storage modules (1, 1') are stacked on the housing (3).

7. Battery pack (B) according to claim 6, wherein the energy storage modules (1, 1') are sandwiched.

8. Battery pack (B) according to claim 6 or 7, wherein the energy storage modules (1, 1') are connected by a connection element (4, 4', 4a, 4a'), and the energy storage module (1') closest to the electronic cover (5) is connected to the connector (7) with another connection element (4, 4', 4a, 4a').

9. Battery pack (B) according to one of the previous claims, wherein each energy storage module (1, 1') comprises a battery management system (5, 5').

10. Battery pack (B) according to one of the previous claims, wherein at least one printed circuit board (8, 9) is included in the housing (3).

11. Battery pack (B) according to claim 10, wherein an in/out circuit board (8) and/or a printed main circuit board (9) is/are included in the housing (3).

12. Battery pack (B) according to claim 11, wherein said printed main circuit board (9) and a coil (10) are included within the housing (3).

13. Battery pack (B) according to claim 12, wherein a DC/DC-converter (13) is further contained in the housing, preferably integrated on the printed main circuit board (9).

14. Use of a battery pack (B) according to one of claims 1 to 13 as a secondary battery, preferably for a commercial vehicle.
